# EUROPÄISCHE PATENTSCHRIFT

(11) **EP 0 763 674 B1**
(45) Veröffentlichungstag und Bekanntmachung des Hinweises auf die Patenterteilung: **06.05.1999**
(21) Anmeldenummer: 96100512.1
(22) Anmeldetag: 16.01.1996
(51) Int. Cl.: F16G 13/06

(54) **Rollenkette (Gelenkkette)**
Roller chain (link chain)
Chaîne à rouleaux (chaîne à maillons articulés)

(30) Priorität: 13.09.1995 DE 29514700 U
(43) Veröffentlichungstag der Anmeldung: 19.03.1997
(73) Patentinhaber: ERICH WULF UND SOHN GmbH & Co. KG, D-59889 Eslohe-Kückelheim (DE)
(72) Erfinder: Wilke, Hermann Dipl.-Ing., D-59889 Eslohe-Kückelheim (DE)
(74) Vertreter: Fritz, Edmund Lothar, Dipl.-Chem.

(56) Entgegenhaltungen:
- EP-A- 0 601 469
- DE-A- 4 334 064
- DE-A- 4 412 166
- DE-U-29 514 700
- GB-A- 1 408 517
- US-A- 2 411 214
- US-A- 5 425 679

## Beschreibung

Die vorliegende Erfindung bezieht sich auf eine Rollenkette (Gelenkkette ) mit den Merkmalen nach dem Oberbegriff des Anspruchs 1.

Rollenketten dieser Art bestehen aus Bolzen, die gelenkig untereinander abwechselnd durch ein Paar Innenlaschen und ein Paar Außenlaschen verbunden sind. Zwischen den Innenlaschen ist eine Laufrolle drehbar gelagert.

Die Aufgabe der Erfindung besteht in der Konzeption einer weitgehend wartungsfreien Rollenkette dieser Art.

Diese Aufgabe wird in der Merkmalen nach dem Anspruch 1 gelöst. Die Unteransprüche haben bevorzugte Ausführungsformen und Varianten dieser Lösung zum Inhalt.

Weitgehend wartungsfrei ist eine Rollenkette nach der Erfindung durch die gelenkige Lagerung der Außenlaschen mittel Nadellager, die nicht nur leichtgängig sind, das heißt eine geringe Reibung verursachen, sondern die insbesondere auch im Dauerbetrieb keine Schmierung bedürfen. Mittels Dichtungsringen, gehalten durch einen Deckel und durch einen Distanzring, sind die Nadellager in ein Quasigehäuse eingeschlossen, das sie vor Verschmutzung schützt.

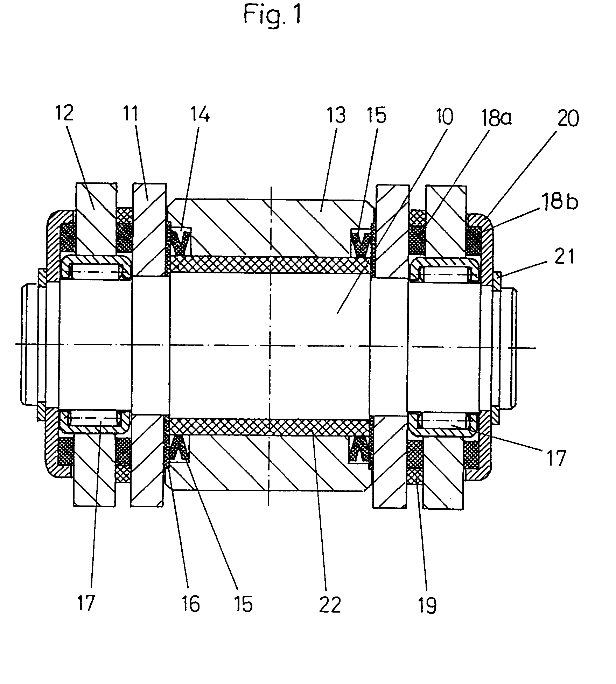

Im folgenden wird die Erfindung unter Bezugnahme auf die beiliegende Zeichnung beschrieben. Diese zeigt einen Querschnitt entlang einer Bolzenachse.

Die Rollenkette ist zusammengesetzt aus Bolzen 10, die abwechselnd durch eine Paar Innenlaschen 11 und durch ein Paar Außenlaschen 12 gelenkig zu einer Kette verbunden sind. Zwischen den Innenlaschen 11 ist eine Laufrolle 13 gelagert.

Während die Innenlaschen 11 fest auf den Bolzen 10 aufgepreßt sind, sind die Außenlaschen 12 drehbar auf den Endbereichen des Bolzens gelagert und zwar mittels Nadellager 17, die mit ihrem Außenring in eine Bohrung der Außenlasche 12 eingepreßt sind.

Zwischen jeder Innenlasche 11 und der Außenlasche 12 ist ein Distanzring 19 gelagert, der einen inneren Dichtungsring 18a umgibt. Im Außenbereich ist ebenfalls ein Dichtungsring, ein äußerer Dichtungsring 18b vorgesehen, der durch einen Deckel 20 gehalten ist. Die Lage des Deckels ist axial durch einen Sicherungsring 21 festgelegt. Den Dichtungsringen fällt die Aufgabe zu die Nadellager vor Verschmutzung zu schützen.

In die Laufrolle 13 ist eine wartungsfreie Laufbüchse 22 eingepreßt. Zur Abdichtung an jeder Seite sind Dichtringe 15 mit V-Querschnitt vorgesehen jeweils gelagert in einer ringförmigen Nut 14. Jeder Dichtring 15 liegt mit einer Lippe einerseits an der Laufrolle und andererseits an einer Anlaufscheibe 16 aus Kunststoff an, die jeweils neben der Innenlasche 11 eingelegt ist.

## Patentansprüche

1. Rollenkette (Gelenkkette) bestehend aus Bolzen die gelenkig abwechselnd durch ein Paar Innenlaschen und durch ein Paar Außenlaschen verbunden sind und auf denen zwischen den Innenlaschen jeweils eine Laufrolle gelagert ist, gekennzeichnet durch die nachfolgend genannten Merkmale:
- Die Außenlaschen (12) sind auf den Bolzen (10) mittels eingepreßter Nadellager (17) gelagert.
- Zwischen Außenlasche (12) und Innenlasche (11) ist ein Distanzring (19) eingesetzt, der einen inneren Dichtungsring (18a) umgibt.
- Außen an der Außenlasche (12) liegt ein äußerer Dichtring (18b) an, gehalten von einem dem Bolzen umgebenden Deckel (20) dessen Lager axial durch einen Sicherungsring (21) festgelegt ist.

2. Rollenkette nach Anspruch 1, dadurch gekennzeichnet, daß in die Laufrolle (13) eine wartungsfreie Laufbüchse (22) eingepreßt ist.

3. Rollenkette nach Anspruch 2, dadurch gekennzeichnet, daß an jeder Seite der Laufrolle (13) in einer Ringnut (14) ein Dichtring (15) V-Querschnitt gelagert ist.

4. Rollenkette nach Anspruch 3, dadurch gekennzeichnet, daß der Dichtring (15) mit einem Schenkel an der Nutwand und mit dem anderen an einer Anlaufscheibe (16) im Bereich der Innenlasche anliegt.

## Claims

1. Roller chain (link chain) consisting of bolts which are flexibly interconnected alternately by a pair of inner straps and a pair of outer straps and on which in each case between the inner straps a roller is supported, characterised by the following features:
- The outer straps (12) are supported on the bolts (10) by means of a forced in needle bearing (17).
- Between the outer strap (12) and the inner strap (11) there is inserted a distance ring (19) which surrounds an inner sealing ring (18a).
- An outer sealing ring (18b) rests against the outside of the outer strap (12) and is held by a cover (20) surrounding the bolt, the bearing of which is axially fixed by a retaining ring (21).

2. Roller chain as claimed in claim 1, characterised in that a maintenance-free bushing (22) is forced into the roller (13).

3. Roller chain as claimed in claim 2, characterised in that at each side of the roller (13) a sealing ring (15) with V-shaped cross section is supported in an annular groove (14).

4. Roller chain as claimed in claim 3, characterised in that the sealing ring (15) rests with one leg at the wall of the groove and with the other leg at a buffer disc (16) in the region of the inner strap.

## Revendications

1. Chaîne à rouleaux (chaîne à maillons articulés) constituée par des rivets qui sont reliés en alternance par une paire d'éclisses ou de joues intérieures et par une paire d'éclisses ou de joues extérieures, dans laquelle un rouleau de roulement est monté entre les éclisses intérieures, caractérisée par les caractéristiques ci-après énumérées:
- les éclisses ou joues extérieures (12) sont montées sur les rivets par l'intermédiaire de roulements à aiguilles (17)
- entre l'éclisse extérieure (12) et l'éclisse intérieure (11) est montée une bague d'écartement (19), qui entoure une bague d'étanchéité intérieure (18a).
- A l'extérieur de l'éclisse extérieure (12) est appliquée une bague d'étanchéité extérieure (18b), qui est maintenue par un couvercle (20) entourant le rivet, couvercle dont le palier est bloqué en direction axiale par une bague de sécurité (21).

2. Chaîne à rouleaux suivant la revendication 1, caractérisée en ce que dans le rouleau de roulement (13) est pressée une douille de roulement (22) ne nécessitant pas d'entretien.

3. Chaîne à rouleaux suivant la revendication 2, caractérisée en ce que de chaque côté du rouleau de roulement (13), une bague d'étanchéité (15) à section transversale en V est montée dans une rainure annulaire (14).

4. Chaîne à rouleaux suivant la revendication 3, caractérisée en ce que la bague d'étanchéité (15) est par une aile appliquée contre la paroi de la rainure et est par l'autre aile appliquée à une rondelle de butée (16) dans la région de l'éclisse intérieure.
